# EUROPÄISCHE PATENTSCHRIFT

(11) **EP 0 765 707 B1**
(45) Veröffentlichungstag und Bekanntmachung des Hinweises auf die Patenterteilung: **09.12.1998**
(21) Anmeldenummer: 96810427.3
(22) Anmeldetag: 26.06.1996
(51) Int. Cl.: B23B 31/02, B25D 17/08

(54) **Werkzeughalter für Bohr- und Meisselgeräte**
Tool holder for boring and chiseling machine
Porte-outil pour appareil à forer et à buriner

(30) Priorität: 28.09.1995 DE 19536154
(43) Veröffentlichungstag der Anmeldung: 02.04.1997
(73) Patentinhaber: HILTI Aktiengesellschaft, 9494 Schaan (LI)
(72) Erfinder: von Keudell, Leopold, 82279 Eching a.A. (DE); Plunger, Bernhard, 6771 Bartholomäberg (AT); Nagelschmied, Klaus, 82110 Germering (DE)
(74) Vertreter: Wildi, Roland

(56) Entgegenhaltungen:
- EP-A- 0 325 087
- DE-A- 3 744 092

## Beschreibung

Die Erfindung betrifft einen Werkzeughalter für Bohr- und Meisselwerkzeuge, mit einer Aufnahmehülse, einem von einem Federelement beaufschlagten, ringförmigen Betätigungselement, das mit wenigstens einem in eine kegelige Aufnahmeöffnung einrückbaren Verriegelungselement zusammenwirkt und einer gegenüber der Aufnahmehülse axial versetzbaren Betätigungsmanschette, wobei die Aufnahmehülse wenigstens eine seitliche Durchtrittsöffnung im Bereich der Aufnahmeöffnung aufweist, in der das Verriegelungselement im wesentlichen radial versetzbar gelagert ist und die Betätigungsmanschette einen, mit dem Betätigungselement zusammenwirkbaren Anschlag aufweist.

Aus der DE 3744092 A ist ein Werkzeughalter für Bohr- und Meisselwerkzeuge bekannt, der eine Aufnahmehülse und ein von einem Federelement beaufschlagtes, ringförmiges Betätigungselement aufweist, das mit wenigstens einem in eine kegelige Aufnahmeöffnung einrückbaren Verriegelungselement und einer gegenüber der Aufnahmehülse axial Versetzbaren Betätigungsmanschette zusammenwirkt, wobei die Aufnahmehülse wenigstens eine seitliche Durchtrittsöffnung im Bereich der Aufnahmeöffnung aufweist, in der das Verriegelungselement im wesentlichen radial versetzbar gelagert ist und die Betätigungsmanschette einen, mit dem Betätigungselement zusammenwirkbaren Anschalg aufweist.

Der aus der EU-PS 0 175 088 bekannte Werkzeughalter weist eine Aufnahmehülse, ein von einem Federelement beaufschlagtes, ringförmiges Betätigungselement für zwei in eine kegelige Aufnahmeöffnung einrückbare Verriegelungselemente und eine gegenüber der Aufnahmehülse axial versetzbare Betätigungsmanschette auf, wobei die Aufnahmehülse zwei seitliche Durchtrittsöffnungen im Bereich der kegeligen Aufnahmeöffnung aufweist, in der die Verriegelungselemente im wesentlichen radial versetzbar gelagert sind.

Die seitlichen Durchtrittsöffnungen sind als in die Aufnahmeöffnung mündende, zur Aussenkontur der Aufnahmehülse hin offene, tangential zur Aufnahmeöffnung angeordnete, in Längsrichtung geneigte Radialschlitze ausgebildet. Diese Radialschlitze sind so geneigt, dass die Öffnungen der Radialschlitze an der Aussenkontur der Aufnahmehülse zum hinteren Bereich der Aufnahmehülse gerichtet sind.

Die Aufnahmehülse weist im hinteren Bereich einen Anschlag in Form einer dem vorderen Bereich der Aufnahmehülse zugewandten Ringschulter auf, die der Abstützung des mit dem Betätigungselement zusammenwirkenden Federelementes dient.

Wird ein kegeliger Einspannschaft eines Bohr- oder Meisselwerkzeuges in die Aufnahmeöffnung gesteckt, erfolgt eine im wesentlichen radiale Versetzung der Verriegelungselemente. Das Federelement wird dabei vorgespannt. Wenn der Einspannschaft an der Innenkontur der Aufnahmebohrung anliegt, deckt sich eine umlaufend ausgebildete Nut an dem Einspannschaft mit den Mündungsbereichen der Durchtrittsöffnungen im Bereich der Innenkontur der Aufnahmeöffnung, so dass die Verriegelungselemente in diese Nut eingreifen können.

Da die Betätigungsmanschette zum Entriegeln des Bohr- und Meisselgerätes von Hand axial in Richtung hinterer Endbereich der Aufnahmehülse verschoben werden muss, darf die Federkraft nicht sehr gross sein.

Dadurch kann von dem Federelement auch nur eine begrenzte Axialkraft ausgehen, die den Einspannschaft in die kegelige Aufnahmeöffnung des Werkzeughalters hineinzieht. Diese Axialkraft wird von dem Gewicht des Werkzeughalters, bzw. von der Elastizität einer Dichtung im Endbereich der Aufnahmeöffnung übertroffen. Die kegelige Fläche des Einspannschaftes liegt daher nicht mehr an der Innenkontur der kegeligen Aufnahmeöffnung an, so dass die Zentrierfunktion des Einspannschaftes in der Aufnahmeöffnung eingeschränkt wird.

Der Erfindung liegt die Aufgabe zugrunde, die Zentrierung des Bohr- oder Meisselwerkzeuges bei einem Werkzeughalter der genannten Art so zu verbessern, dass ein einwandfreier Rundlauf gewährleistet ist.

Erfindungsgemäss wird die Aufgabe dadurch gelöst, dass an der Aufnahmehülse und an der Betätigungsmanschette Verbindungsmittel zur axialen Festlegung der Betätigungsmanschette an der Aufnahmehülse vorgesehen sind.

Mit Hilfe des an der Betätigungsmanschette vorgesehenen Anschlages kann zusätzlich zu der vom Federelement erzeugten Axialkraft eine weitere Axialkraft auf dass Betätigungselement ausgeübt werden. Diese weitere Axialkraft wirkt verstärkt auf die Verriegelungselemente, so dass diese den Einspannschaft in die Aufnahmeöffnung drücken. Dadurch wird eine bessere Zentrierung und ein einwandfreier Rundlauf des Bohr- oder Meisselwerkzeuges erreicht. Die Verbindungmittel verhindern das Lösen des des Anschlages während der Bearbeitung eines Untergrundes.

Während eines Bearbeitungsvorganges können unterschiedlich harte Stossbelastungen auftreten, die über den Einspannschaft des Bohr- oder Meisselwerkzeuges, die Verriegelungselemente und das Betätigungselement auf den Anschlag der Betätigungsmanschette übertragen werden. Damit eine Beschädigung der zwischen der Betätigungsmanschette und der Aufnahmehülse wirkenden Verbindungsmittel verhindert wird, ist zweckmässigerweise zwischen dem Anschlag und dem Betätigungselement ein Dämpfungselement angeordnet. Das Dämpfungselement ist beispielsweise als elastischer Ring ausgebildet, der aus Gummi gefertigt ist.

Aus konstruktiven Gründen ist der Anschlag vorzugsweise als Ringschulter an einer Innenkontur der Betätigungsmanschette ausgebildet.

Stösse die während eines Bearbeitungsvorganges erfolgen, wirken entgegen der Bearbeitungsrichtung auf den Werkzeughalter. Damit einer Versetzung der Verriegelungselemente entgegengewirkt werden kann, ist der auf das Betätigungselement wirkende Anschlag vorteilhafterweise in dem der Mündung der Aufnahmeöffnung abgewandten Endbereich der Betätigungsmanschette angeordnet und zur Mündung der Aufnahmeöffnung hin gewandt.

Aus herstelltechnischen und wirtschaftlichen Gründen sind vorzugsweise die Verbindungsmittel als Gewinde ausgebildet. Die sich nur über eine kurze Länge des Werkzeughalters erstreckenden Gewinde sind in den hinteren oder vorderen Endbereichen der Aufnahmehülse und der Betätigungsmanschette angeordnet. Die Gewinde wirken dann zusammen, wenn der Anschlag der Betätigungsmanschette mit dem Betätigungselement zusammenwirkt. Ansonsten greifen die Gewinde nicht ineinander, so dass die Betätigungsmanschette gegenüber der Aufnahmehülse axial versetzbar ist, ohne dass eine Verdrehung der Betätigungsmanschette gegenüber der Aufnahmehülse erfolgen muss.

Bei Werkzeughaltem, deren Aufnahmehülse seitliche Durchtrittsöffnungen in Form von geneigten Radialschlitzen aufweisen sind die Verriegelungselemente zweckmässigerweise als Stife ausgebildet, die mit deren Endabschnitten die Mantelkontur der Aufnahmehülse überragen. An jenem Bereich der Stifte, der die Mantelkontur überragt, kann das Betätigungselement angreifen. Beim axialen Versetzen des Betätigungselementes erfolgt somit auch eine axiale Versetzung der Verriegelungselemente.

Bei Werkzeughaltem, deren Aufnahmehülse seitliche Durchtrittsöffnungen in Form von länglichen Schlitzen aufweisen, sind die Verriegelungselemente vorteilhafterweise klinkenartig ausgebildet. Die länglichen Schlitze entsprechen dabei im wesentlichen der Aussenkontur der Verriegelungselemente und dienen der Aufnahme und der Führung der Verriegelungselemente.

Die Erfindung wird anhand von Zeichnungen, die zwei Ausführungsbeispiele wiedergeben näher erläutert.Es zeigen:
- Fig. 1: einen erfindungsgemässen Werkzeughalter mit stiftförmigen Verriegelungselementen, in teilweise geschnittener Darstellung;
- Fig. 2: einen weiteren Werkzeughalter mit klinkenartigen Verriegelungselementen, in teilweise geschnittener Darstellung.

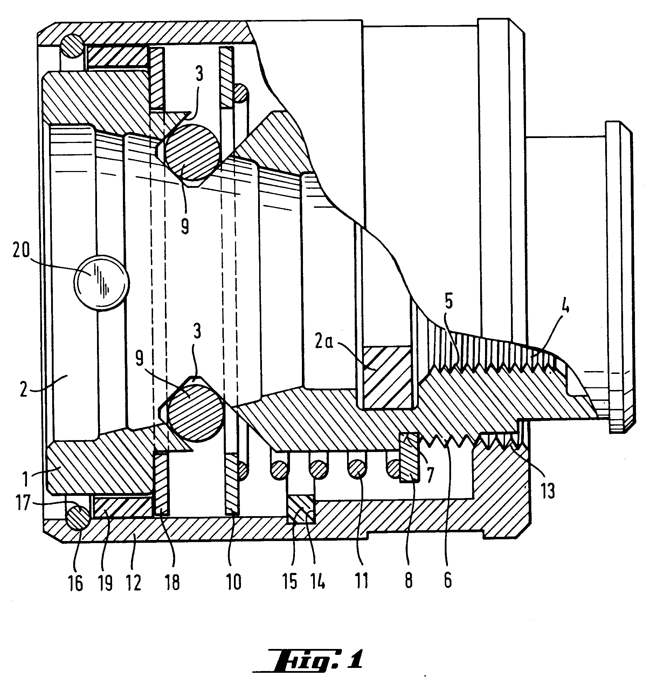

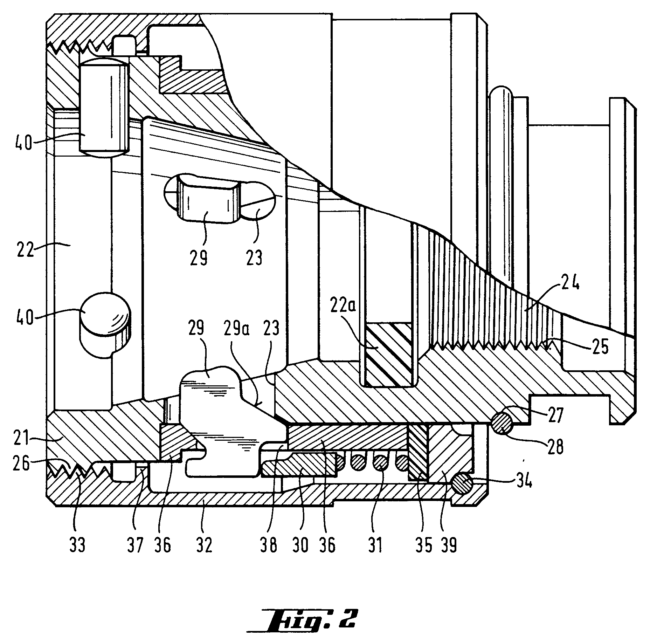

Die in den Fig. 1 und 2 dargestellten Werkzeughalter weisen eine Aufnahmehülse 1, 21, mehrere Verriegelungselemente 9, 29, ein ringförmiges Betätigungselement 10, 30, ein Federelement 11, 31 und eine Betätigungsmanschette 12, 32 auf.

Die Aufnahmehülse 1, 21 hat eine zentrale Durchgangsbohrung, die sich aus einer kegeligen Aufnahmeöffnung 2, 22 in einem vorderen Bereich und einer sich daran anschliessenden Aufnahmebohrung 4, 24 mit Innengewinde 5, 25 in einem hinteren Bereich des Werkzeughalters zusammensetzt. Zwischen der Aufnahmeöffnung 2, 22 und der Aufnahmebohrung 4, 24 ist ein ringförmiger, elastischer Dämpfer 2a, 22a in einem entsprechend ausgebildeten Aufnahmebereich der Aufnahmehülse 1, 21 angeordnet. Über die Aufnahmebohrung 4, 24 ist der Werkzeughalter an einem Bohr- und/oder Meisselgerät festlegbar. Im Bereich der kegeligen Aufnahmeöffnung 2, 22 weist die Aufnahmehülse 1, 21 mehrere seitliche Durchtrittsöffnungen 3, 23 auf, die der Aufnahme jeweils eines Verriegelungselementes 9, 29 dienen. Die seitlichen Durchtrittsöffnungen 3, 23 sind am Umfang der Aufnahmeöffnung 2, 22 gleichmässig verteilt angeordnet.

Die Aufnahmehülse 1, 21 ist teilweise umgeben von der Betätigungsmanschette 12, 32, die gegenüber der Aufnahmehülse 1, 21 axial versetzbar ist. Zwischen der Betätigungsmanschette 12, 32 und der Aufnahmehülse 1, 21 befindet sich das ebenfalls gegenüber der Aufnahmehülse 1, 21 versetzbare, mit den Verriegelungselementen 9, 29 zusammenwirkende, ringförmige Betätigungselement 10, 30.

Die Aufnahmehülse 1 des in Fig. 1 dargestellten entriegelten Werkzeughalters weist im hinteren Endbereich ein Verbindungsmittel 6 in Form eines Aussengewinde auf, das mit einem als Innengewinde ausgebildeten Verbindungsmittel 13 der Betätigungsmanschette 12 zusammenwirkt. Das Innengewinde ist im Endbereich der Betätigungsmanschette 12 angeordnet. Zwischen dem Aussengewinde und den seitlichen Durchtrittsöffnungen 3 besitzt die Aufnahmehülse 1 eine umlaufend ausgebildete Nut 7, in die ein Anschlagelement 8 in Form eines Sicherungsringes ragt. Dieses Anschlagelement 8 dient der axialen Abstützung des mit dem Betätigungselement 10 zusammenwirkenden Federelementes 11. Die seitlichen Durchtrittsöffnungen 3 im Bereich der kegeligen Aufnahmeöffnung 2 sind als seitlich in die Aufnahmeöffnung 2 mündende, zur Aussenkontur der Aufnahmehülse 1 hin offene, tangential zur Aufnahmeöffnung 2 angeordnete Radialschlitze ausgebildet. In den Radialschlitzen sitzen Verriegelungselemente 9 in Form von Stiften. Diese Stifte überragen mit deren Endabschnitten die Mantelkontur der Aufnahmehülse 1.

An der Innenkontur der Betätigungsmanschette 12 befindet sich ein Anschlag 14 in Form einer umlaufend ausgebildeten Ringschulter, die dem Mündungsbereich der kegeligen Aufnahmeöffnung 2 zugewandt ist. An dieser Ringschulter liegt ein ringförmiges Dämpfungselement 15, das axial gehalten wird, durch eine formschlüssige Verbindung mit der Betätigungsmanschette 12. Unmittelbar vor der Ringschulter, d.h. zwischen dem Betätigungselement 10 und der Ringschulter ist an der Innenkontur der Betätigungsmanschette 10 eine umlaufend ausgebildete Vertiefung vorgesehen, in die das Dämpfungselement 15 ragt.

Wird der Einspannschaft eines nicht dargestellten Bohr- oder Meisselwerkzeuges in die Aufnahmeöffnung 2 gesteckt, erfolgt eine im wesentlichen radiale Versetzung der stiftförmigen Verriegelungselemente 9. Das Federelement 11 wird dabei vorgespannt. Wenn der Einspannschaft an der Innenkontur der Aufnahmeöffnung 2 anliegt, dann deckt sich eine umlaufend ausgebildete Nut an dem Einsteckende mit den Mündungsbereichen der Durchtrittsöffnungen 3 im Bereich der Innenkontur der Aufnahmeöffnung, so dass die stiftförmigen Verriegelungselemente 9 in diese Nut eingreifen können. Das Federelement 11 wird dabei wieder zum Teil entlastet.

Um eine Fixierung der in die Nut des Einspannschaftes ragenden Verriegelungselemente 9 erreichen zu können, ist die Betätigungsmanschette 12 über das Innengewinde gegenüber dem Aussengewinde der Aufnahmehülse 1 verdrehbar und somit axial in eine Verriegelungsstellung versetzbar. In dieser Verriegelungsstellung liegt die Ringschulter 14 der Betätigungsmanschette unter Zwischenlage des ringförmigen Dämpfungselementes 15 an dem Betätigungselement 10 an.

Zur Entnahme eines in dem Werkzeughalter eingesetzten, nicht dargestellten Bohr- oder Meisselwerkzeuges muss die Betätigungsmanschette 12 in ihre Ausgangsstellung zurückversetzt werden, so dass die Ringschulter 14 von dem Betätigungselement 10 beabstandet ist. Mittels eines ringförmigen Anschlagelementes 17, das im vorderen Bereich an der Innenkontur der Betätigungsmanschette 12 angeordnet ist, wird eine im wesentlichen radiale Versetzung der Verriegelungselemente 9 in ihre Freigabestellung erreicht, wenn die Betätigungsmanschette 12 gegenüber der Aufnahmehülse nach hinten versetzt wird. Die Mitnahme der Verriegelungselemente 9 erfolgt mittels einer ringförmigen Mitnahmescheibe 18, die zwischen dem Anschlagelement 17 und den Verriegelungselementen 9 angeordnet ist. In der Freigabestellung ragen die Verriegelungselemente 9 nicht mehr in die Aufnahmeöffnung 2 der Aufnahmehülse 1. Das Anschlagelement 17 wird von einem federbaren Ring gebildet, dessen Querschnitt rund ist und in eine umlaufend ausgebildete Vertiefung 16 an der Innenkontur der Betätigungsmanschette 12 eingreift.

Zwischen der Mitnahmescheibe 18 und dem Anschlagelement 17 ist ein Dämpfungsring 19 angeordnet. Im Mündungsbereich der Aufnahmeöffnung 2 ist ein Drehmitnahmeelement 20 angeordnet, das in Form eines Stiftes ausgebildet ist und radial in die Aufnahmeöffnung 2 ragt.

Die Aufnahmehülse 21 des in Fig. 2 dargestellten, verriegelten Werkzeughalters weist im vorderen Endbereich ein Verbindungsmittel 26 in Form eines Aussengewindes auf, das mit einem von der Betätigungsmanschette 32 gebildeten Verbindungsmittel 33 in Form eines Innengewindes zusammenwirkt. Das Innengewinde ist im vorderen Endbereich der Betätigungsmanschette 32 angeordnet. Im hinteren Endbereich besitzt die Aufnahmehülse 21 eine umlaufend ausgebildete Nut 27, in die ein Anschlagelement 28 in Form eines Sicherungsringes ragt. Das Anschlagelement 28 dient zusammen mit einem die Aufnahmehülse 21 umgebenden, gegenüber der Aufnahmehülse 21 axial versetzbaren Stützring 39 der axialen Abstützung des mit dem Betätigungselement 30 zusammenwirkenden Federelementes 31. Zwischen dem Stützring 39 und dem Federelement 31 befindet sich ein ringförmiges Dämpfungselement 35.

Zwischen dem Betätigungselement 30 und der Aufnahmehülse 21 befindet sich eine gegenüber der Aufnahmehülse 21 axial verschiebbare Lagerhülse 36, die der Aufnahme und der Führung der Verriegelungselemente 29 dient. Die Verriegelungselemente 29 sind in entsprechenden seitlichen Durchtritten 38 der Lagerhülse 36 gelagert, die sich mit den seitlichen Durchtrittsöffnungen 23 der Aufnahmehülse 21 decken. Die Verriegelungselemente 29 sind hakenförmig ausgebildet und weisen einen mit der Lagerhülse 36. dem Betätigungselement 30, sowie mit dem Mündungsbereich der seitlichen Durchtrittsöffnungen 23 an der Aussenkontur der Aufnahmehülse 21 zusammenwirkenden Verriegelungsbereich auf. Beim axialen Versetzen des Stützringes 39 und der Lagerhülse 36 erfolgt ein axiales Versetzen der Verriegelungselemente 29. Die Verriegelungselemente 29 durchsetzen die seitlichen Durchtritte 38 und sind in einem vorderen Bereich der Lagerhülse 36 schwenkbar eingehängt. Eine dem hinteren Bereich der Aufnahmehülse 21 hin zugewandte geneigte Fläche 29a der Verriegelungselemente 29 stützt sich beim axialen Versetzen des Verriegelungselementes 29 an dem Mündungsbereich der seitlichen Durchtrittsöffnung 23 ab. Auf diese Weise wird das Verriegelungselement 29 radial nach aussen geschwenkt, so dass das Verriegelungselement 29 nicht mehr in die Aufnahmeöffnung 22 der Aufnahmehülse 21 ragt.

Wird der Einspannschaft eines nicht dargestellten Bohr- oder Meisselwerkzeuges in die Aufnahmeöffnung 22 gesteckt, erfolgt eine im wesentlichen radiale Versetzung der Verriegelungselemente 29. Das Federelement 31 wird dabei vorgespannt. Wenn der Einspannschaft an der Innenkontur der Aufnahmeöffnung 22 anliegt, dann deckt sich eine umlaufend ausgebildete, nicht dargestellte Nut des Einsteckendes mit den seitlichen Durchtrittsöftnungen 23 der Aufnahmehülse 21, sowie den seitlichen Durchtritten 38 der Lagerhülse 36, so dass die Verriegelungselemente 29 in diese Nut eingreifen können. Das Federelement 31 wird dabei wieder etwas entlastet.

Um eine Fixierung der in die Nut des Einspannschaftes eingreifenden Verriegelungselemente 29 erreichen zu können, ist die Betätigungsmanschette 32 mit ihrem Innengewinde gegenüber einem Aussengewinde der Aufnahmehülse 21 verdrehbar und somit axial nach vome in eine Verriegelungsstellung versetzbar. Im hinteren Bereich der Betätigungsmanschette 32 befindet sich an der Innenkontur ein Anschlag 34 in Form eines ringförmigen Federringes, der in einer umlaufend ausgebildeten Vertiefung der Betätigungsmanschette 32 sitzt. In der Verriegelungsstellung drückt der Anschlag 34 gegen das Federelement 31, so dass dieses sehr stark vorgespannt wird. Das Federelement 31 drückt auf die Verriegelungselemente 29, so dass diese in die Aufnahmeöffnung 22 der Aufnahmehülse 21, bzw. in die Nut des in der Aufnahmeöffnung einliegenden Einspannschaftes eingreifen. Zwischen dem Stützring 39 und dem Federelement 31 ist ein ringförmiges Dämpfungselement 35 angeordnet.

Zur Entnahme des in dem Werkzeughalter eingesetzten, nicht dargestellten Bohr- oder Meisselwerkzeuges muss die Betätigungsmanschette 32 in ihre Ausgangsstellung zurückversetzt werden, so dass der Anschlag 34 nicht mehr gegen das Federelement 31 drückt. Mittels eines Anschlagelementes 37 das im vorderen Bereich, an der Innenkontur der Betätigungsmanschette 32 angeordnet ist, wird eine im wesentlichen radiale Versetzung der Verriegelungselemente 29 in ihre Freigabestellung erreicht, wenn die Betätigungsmanschette 32 gegenüber der Aufnahmehülse nach hinten versetzt wird. Die Mitnahme der Verriegelungselemente 29 erfolgt mittels eines an der Innenkontur der Betätigungsmanschette 32 angeordneten ringförmigen Anschlagelementes 37 in Form eines scheibenförmigen Bundes. In der Freigabestellung ragen die Verriegelungselemente 29 nicht mehr in die Aufnahmeöffnung 22 der Aufnahmehülse 21.

Im Mündungsbereich der Aufnahmeöffnung 22 sind drei gleichmässig verteilt angeordnete, stiftförmige Drehmitnahmeelemente 40 angeordnet, die radial in die Aufnahmeöffnung 22 ragen.

## Patentansprüche

1. Werkzeughalter für Bohr- und Meisselwerkzeuge, mit einer Aufnahmehülse (1, 21), einem von einem Federelement (11, 31) beaufschlagten ringförmigen Betätigungselement (10, 30), das mit wenigstens einem in eine kegelige Aufnahmeöffnung (2, 22) einrückbaren Verriegelungselement (9, 29) zusammenwirkt und einer gegenüber der Aufnahmehülse (1, 21) axial versetzbaren Betätigungsmanschette (12, 32), wobei die Aufnahmehülse (1, 21) wenigstens eine seitliche Durchtrittsöffnung (3, 23) im Bereich der Aufnahmeöffnung (2, 22) aufweist, in der das Verriegelungselement (9, 29) im wesentlichen radial versetzbar gelagert ist und die Betätigungsmanschette (12, 32) einen, mit dem Betätigungselement (10, 30) zusammenwirkbaren Anschlag (14, 34) aufweist, **dadurch gekennzeichnet**, dass an der Aufnahmehülse (1, 21) und an der Betätigungsmanschette (12, 32) Verbindungsmittel 6, 13, 26, 33 zur axialen Festlegung der Betätigungsmanschette (12, 32) an der Aufnahmehülse (1, 21) vorgesehen sind.

2. Werkzeughalter nach Anspruch 1, dadurch gekennzeichnet, dass zwischen dem Anschlag (14, 34) und dem Betätigungselement (10, 30) ein Dämpfungselement (15, 35) angeordnet ist.

3. Werkzeughalter nach Anspruch 1 oder 2, dadurch gekennzeichnet, dass der Anschlag (14, 34) als Ringschulter an einer Innenkontur der Betätigungsmanschette (12, 32) ausgebildet ist.

4. Werkzeughalter nach einem der Ansprüche 1 bis 3, dadurch gekennzeichnet, dass der Anschlag (14, 34) in dem der Mündung der Aufnahmebohrung (4, 24) abgewandten Endbereich der Betätigungsmanschette (12, 32) angeordnet ist und zur Mündung der Aufnahmebohrung (4, 24) hin gewandt ist.

5. Werkzeughalter nach einem der Ansprüche 1 bis 4, dadurch gekennzeichnet, dass die Verbindungsmittel (6, 13, 26, 33) als Gewinde ausgebildet sind.

6. Werkzeughalter nach einem der Ansprüche 1 bis 5, dadurch gekennzeichnet, dass das Verriegelungselement (9) stiftförmig ausgebildet ist.

7. Werkzeughalter nach einem der Ansprüche 1 bis 5, dadurch gekennzeichnet, dass das Verriegelungselement (29) klinkenartig ausgebildet ist.

## Claims

1. Tool holder for a drill or chiselling tool having a receiving sleeve (1, 21), and having an annular actuating element (10, 30) which is loaded by a spring element (11, 31) and which co-operates with at least one locking element (9, 29) that can enter a conical receiving opening (2, 22), and having an actuating sleeve (12, 32) displaceable axially with respect to the receiving sleeve (1, 21), the receiving sleeve (1, 21) having at least one lateral through opening (3, 23) in the region of the receiving opening (2, 22) in which the locking element (9, 29) is carried for substantially radial displacement, and the actuating sleeve (12, 32) having an abutment (14, 34) that can co-operate with the actuating element (10, 30), characterised in that connecting means (6, 13, 26, 33) are provided at the receiving sleeve (1, 21) and at the actuating sleeve (12, 32) for fixing the axial position of the actuating sleeve (12, 32) at the receiving sleeve (1, 21).

2. Tool holder according to claim 1, characterised in that a damping element (15, 35) is arranged between the abutment (14, 34) and the actuating element (10, 30).

3. Tool holder according to claim 1 or 2, characterised in that the abutment (14, 34) is made as an annular shoulder at an inner profile of the actuating sleeve (12, 32).

4. Tool holder according to one of claims 1 to 3, characterised in that the abutment (14, 34) is arranged in the end region of the actuating sleeve (12, 32) that faces away from the mouth of the receiving bore (4, 24) and itself faces towards the mouth of the receiving bore (4, 24).

5. Tool holder according to one of claims 1 to 4, characterised in that the connecting means (6, 13, 26, 33) are made as screw threading.

6. Tool holder according to one of claims 1 to 5, characterised in that the locking element (9) is made pin shaped.

7. Tool holder according to one of claims 1 to 5, characterised in that the locking element (29) is made pawl shaped.

## Revendications

1. Porte-outil pour outils de forage et de burinage, comprenant un fourreau récepteur (1, 21), un élément d'actionnement annulaire (10, 30) qui est sollicité par un élément élastique (11, 31) et qui coopère avec au moins un élément de verrouillage (9, 29) pouvant s'engager dans un logement conique (2, 22), et un manchon d'actionnement (12, 32) pouvant se déplacer axialement par rapport au fourreau récepteur (1, 21), le fourreau récepteur (1, 21) comportant, dans la zone du logement (2, 22), au moins une ouverture latérale débouchante (3, 23) dans laquelle l'élément de verrouillage (9, 29) est logé avec une possibilité de déplacement sensiblement radial, et le manchon d'actionnement (12, 32) comporte une butée (14, 34) pouvant coopérer avec l'élément d'actionnement (10, 30), caractérisé en ce que des moyens de liaison (6, 13, 26, 33) sont prévus sur le fourreau récepteur (1, 21) et sur le manchon d'actionnement (12, 32) pour bloquer axialement le manchon d'actionnement (12, 32) sur le fourreau récepteur (1, 21).

2. Porte-outil selon la revendication 1, caractérisé en ce qu'un élément amortisseur (15, 35) est disposé entre la butée (14, 34) et l'élément d'actionnement (10, 30).

3. Porte-outil selon la revendication 1 ou 2, caractérisé en ce que la butée (14, 34) est conçue sous la forme d'un épaulement annulaire situé sur le contour intérieur du manchon d'actionnement (12, 32).

4. Porte-outil selon l'une des revendications 1 à 3, caractérisé en ce que la butée (14, 34) se trouve dans la zone extrême du manchon d'actionnement (12, 32) située à l'opposé de l'embouchure de l'orifice récepteur (4, 24) et est tournée en direction de l'embouchure de l'orifice récepteur (4, 24).

5. Porte-outil selon l'une des revendications 1 à 4, caractérisé en ce que les moyens de liaison (6, 13, 26, 33) sont conçus sous la forme de filetages.

6. Porte-outil selon l'une des revendications 1 à 5, caractérisé en ce que l'élément de verrouillage (9) est conçu sous la forme d'une tige.

7. Porte-outil selon l'une des revendications 1 à 5, caractérisé en ce que l'élément de verrouillage (29) est conçu à la façon d'un cliquet.
